(19) **Europäisches Patentamt / European Patent Office / Office européen des brevets**

(11) **EP 4 550 516 A2**

(12) # EUROPEAN PATENT APPLICATION

(43) Date of publication:
07.05.2025 Bulletin 2025/19

(21) Application number: 24199824.4

(22) Date of filing: 11.09.2024

(51) International Patent Classification (IPC):
H01M 10/0587 (2010.01)    H01M 50/533 (2021.01)
H01M 50/557 (2021.01)    H01M 4/58 (2010.01)

(52) Cooperative Patent Classification (CPC):
H01M 10/0587; H01M 4/58; H01M 50/533;
H01M 50/557

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.11.2023 KR 20230151076

(71) Applicant: SAMSUNG SDI CO., LTD.
Yongin-si, Gyeonggi-do 17084 (KR)

(72) Inventors:
• Ha, Jaehwan
Yongin-si, Gyeonggi-do 17084 (KR)
• Kim, Duckhyun
Yongin-si, Gyeonggi-do 17084 (KR)
• Lee, Dong Myung
Yongin-si, Gyeonggi-do 17084 (KR)
• Yoo, Heeeun
Yongin-si, Gyeonggi-do 17084 (KR)

(74) Representative: Michalski Hüttermann & Partner
Patentanwälte mbB
Kaistraße 16A
40221 Düsseldorf (DE)

(54) **ELECTRODE FOR RECHARGEABLE BATTERY, ELECTRODE ASSEMBLY AND RECHARGEABLE BATTERY INCLUDING THE SAME**

(57) An electrode for a rechargeable battery includes a substrate having an electrode uncoated portion and an electrode active portion, a functional layer on the substrate at the electrode active portion, an active material layer on the functional layer, and an electrode tab electrically connected to the substrate at the electrode uncoated portion, wherein a thickness (T) of the functional layer, a width (L) of the electrode tab, and a thickness (t) of the electrode tab satisfy Equation 1:

Equation 1

$$15 \geq \frac{t}{L \times T}$$

.

EP 4 550 516 A2

# FIG. 1

**Description**

**BACKGROUND**

**1. Field**

Embodiments of the present disclosure relate to a rechargeable battery, and, for example, to a rechargeable battery electrode, and an electrode assembly and a rechargeable battery including the same.

**2. Description of the Related Art**

Rechargeable batteries are electric power storage systems that provide excellent or suitable energy density by converting electrical energy into chemical energy and storing it. Compared to primary batteries, which cannot be recharged, rechargeable batteries can be recharged and are widely utilized in information technology (IT) devices such as smartphones, laptops, and tablet personal computers (PCs).

Recently, interest in electric vehicles has increased due to environmental issues and fossil fuel depletion issues, and accordingly, there is a trend to utilize rechargeable batteries in electric vehicles. In accordance with this trend, rechargeable batteries are desired or required to have characteristics such as relatively high density, relatively high power, and/or relatively high safety.

Depending on the shape of the battery case, the rechargeable battery may be classified as a can-shaped rechargeable battery, configured such that the electrode assembly is mounted in a metal can, or a pouch-type or kind rechargeable battery, configured such that the electrode assembly is mounted in a laminated pouch case.

The pouch-type or kind rechargeable batteries are inexpensive to manufacture, have relatively high energy densities, and have the advantage of being easy to form large-capacity battery packs through series or parallel connections, so they have recently been in the spotlight as electric power sources for electric vehicles or hybrid vehicles.

The pouch-type or kind rechargeable batteries have a structure in which a plate-shaped electrode tab (or electrode lead) is welded to the electrode of an electrode assembly and then sealed with an electrolyte solution. A portion of the electrode tab is exposed to the outside of the pouch case and is utilized to draw (e.g., draw out) the current produced inside the pouch to the outside.

However, as the resistance of the electrode tab increases, current loss may occur due to exothermic reactions, and/or the like, and the current drawn to the outside decreases.

The above information disclosed in this Background section is only for enhancement of understanding of the background of the disclosure and therefore it may contain information that does not constitute prior art.

**SUMMARY**

Aspects of embodiments of the present disclosure relate to an electrode for a rechargeable battery capable of minimizing or reducing current loss in the electrode tab, an electrode assembly, and/or a rechargeable battery including the same.

Additional aspects will be set forth in part in the description which follows and, in part, will be apparent from the description, or may be learned by practice of the presented embodiments of the disclosure.

According to one or more embodiments of the present disclosure, an electrode for a rechargeable battery includes a substrate having an electrode uncoated portion and an electrode active portion, a functional layer on the substrate at the electrode active portion, an active material layer on the functional layer, and an electrode tab electrically connected to the substrate at the electrode uncoated portion, wherein a thickness (T) of the functional layer, a width (L) of the electrode tab, and a thickness (t) of the electrode tab satisfy Equation 1:

Equation 1

$$15 \geq \frac{t}{L \times T}$$

In one or more embodiments, the width of the electrode tab may be 3 mm to 15 mm, the thickness of the electrode tab may be 0.01 mm to 0.2 mm.

In one or more embodiments, a thickness of the functional layer may be 0.3 micrometers ($\mu$m) to 30 $\mu$m.

In one or more embodiments, a resistance of the functional layer may be higher than a resistance of the active material layer.

In one or more embodiments, the resistance of the functional layer may be higher than a resistance of the electrode tab.

In one or more embodiments, the functional layer may include a material including (e.g., containing) a compound represented by Chemical Formula 1, a compound represented by Chemical Formula 2, and/or any suitable combination thereof:

$$\text{Chemical Formula 1} \qquad Li_{a1}M^1{}_{x1}Fe_{1-x1}PO_4$$

wherein, in Chemical Formula 1, $0.90 \leq a1 \leq 1.5$, $0 \leq x1 \leq 0.4$, and $M^1$ is Mg, Co, Ni, and/or any suitable combination thereof,

$$\text{Chemical Formula 2} \qquad Li_{a2}Mn_{x2}Fe_{1-x2}PO_4$$

wherein, in Chemical Formula 2, $0.90 \leq a2 \leq 1.5$, and $0.1 \leq x2 \leq 1$.

In one or more embodiments, the substrate may include (e.g., be made of or be) aluminum, and the active material layer may include a positive active material.

In one or more embodiments, the electrode tab may include (e.g., be made of or be) aluminum.

In one or more embodiments, an electrode assembly according to one or more embodiments of the present disclosure includes a positive electrode of the aforementioned rechargeable battery electrode, a separator overlapping the positive electrode, and a negative electrode overlapping the separator.

According to one or more embodiments of the present disclosure, a rechargeable battery includes an electrode assembly including a positive electrode made of the aforementioned electrode for the rechargeable battery, a separator overlapping the positive electrode, and a negative electrode overlapping the separator, a case containing an electrolyte together with the electrode assembly, and a cap assembly sealing the case.

Aspects of embodiments of the present disclosure relate to an electrode for a rechargeable battery, an electrode assembly, and a rechargeable battery including the same, having improved efficiency by minimizing or reducing the current resistance in the electrode tab by selectively forming the thickness of the functional layer according to the width and thickness of the electrode tab.

## BRIEF DESCRIPTION OF DRAWINGS

FIG. 1 is a schematic perspective view of a rechargeable battery according to one or more embodiments of the present disclosure.

FIG. 2 is a schematic cross-sectional view of an electrode assembly of FIG. 1, according to one or more embodiments of the present disclosure.

FIG. 3 is a schematic plan view of a first electrode of the electrode assembly shown in FIG. 2, according to one or more embodiments of the present disclosure, in an unwound state.

FIG. 4 is a cross-sectional view taken along the line IV-IV of FIG. 3, according to one or more embodiments of the present disclosure.

FIGs. 5-7 are each a graph showing capacity according to the number of cycles in Comparative Examples and Examples.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

Hereinafter, the present disclosure will be described in more detail with reference to the accompanying drawings, in which embodiments of the present disclosure are shown. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

The drawings and description are to be regarded as examples and are not restrictive. In the drawings, the relative sizes of elements, layers, and regions may be exaggerated for clarity. Further, like reference numerals designate like elements throughout, and duplicative descriptions thereof may not be provided the specification.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure

It will be understood that when an element, such as a layer, film, region or substrate, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

As used herein, the singular forms "a," "an" and "the" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

Hereinafter, a rechargeable battery according to one or more embodiments of the present disclosure will be described in more detail with reference to the accompanying drawings.

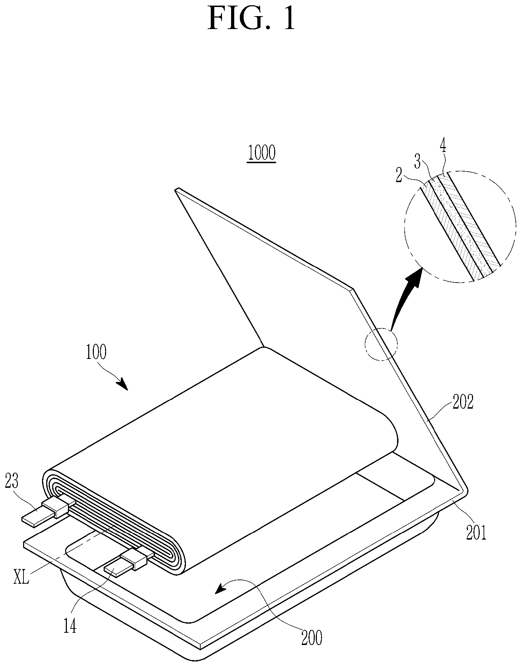

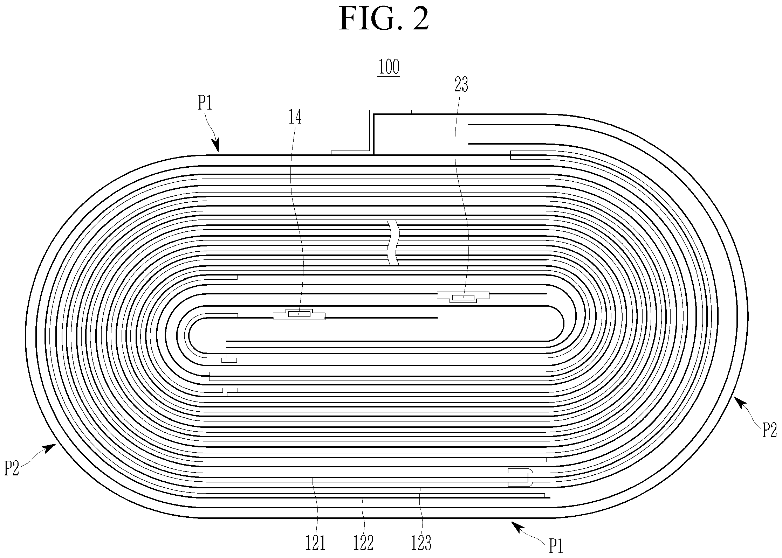

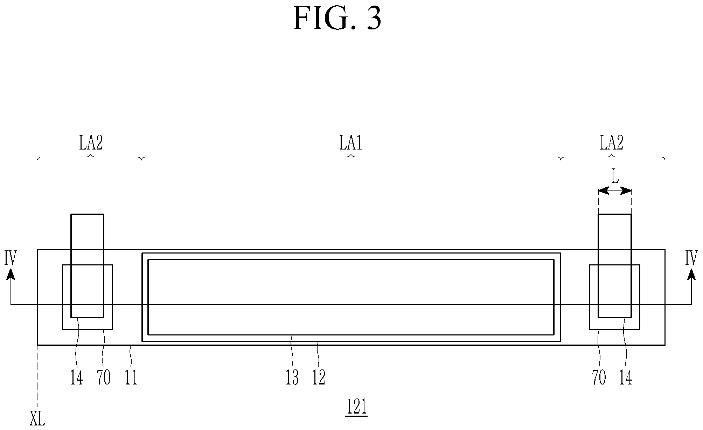

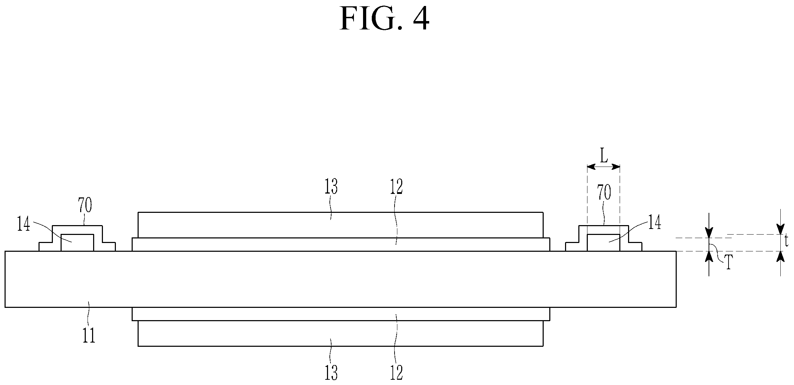

FIG. 1 is a schematic perspective view of a rechargeable battery according to one or more embodiments of the present disclosure, FIG. 2 is a schematic cross-sectional view of an electrode assembly of FIG. 1, according to one or more embodiments of the present disclosure, FIG. 3 is a schematic plan view of a first electrode of the electrode assembly shown in FIG. 2, according to one or more embodiments of the present disclosure, in an unwound state, and FIG. 4 is a cross-sectional view taken along the line IV-IV of FIG. 3, according to one or more embodiments of the present disclosure.

As shown in FIG. 1, a rechargeable battery 1000 according to one or more embodiments of the present disclosure includes an electrode assembly 100 and a pouch 200.

Referring to FIGs. 1 and 2, the electrode assembly 100 includes a first electrode 121, a second electrode 122, and a separator 123 positioned between the first electrode 121 and the second electrode 122. The separator 123 is for insulation, and may be stacked in the order of the first electrode 121, the separator 123, the second electrode 122, and the separator 123.

The electrode assembly 100 may be in the form of a jelly roll in which the first electrode 121, the separator 123, and the second electrode 122 are stacked and wound around a winding axis XL. If necessary, the electrode assembly 100 may be wound and pressed flat, and a cross-section cut in a vertical direction across the winding axis XL may have an oval shape that is long in one direction.

Accordingly, the electrode assembly 100 includes a flat portion P1 that is relatively flat in cross-section and a curved portion P2 that is relatively curved (e.g., round). The flat portion P1 may be a portion that is pressed after winding the electrode assembly 100, and the curved portion P2 may connect the two opposing flat portions P1. In the electrode assembly 100, one rotation may include a pair of opposing flat portions and a pair of curved portions connected to ends of the flat portions.

For example, referring to FIGs. 3 and 4, the first electrode 121 includes a first electrode active portion LA1 and a pair of first electrode uncoated regions LA2 positioned on opposite sides of the first electrode active portion LA1. Additionally, the second electrode also includes a second electrode active portion and a pair of second electrode uncoated portions positioned on opposite sides of the second electrode active portion.

Hereinafter, if (e.g., when) the band-shaped first and second electrodes are wound around the winding axis XL, the end adjacent to the winding axis XL is referred to as the front end, and the end positioned relatively far is referred to as the rear end.

Referring to FIGs. 3 and 4, the first electrode active portion LA1 includes a first substrate 11, a functional layer 12 formed on at least one surface of the first substrate 11, and a first active material layer 13 formed on the functional layer 12.

The first electrode uncoated region LA2 is positioned at the front end and the rear end of the first electrode 121, respectively. A separate material layer is not formed on the first substrate 11, so the surface of the first substrate 11 may be exposed, and a first electrode tab 14 for drawing current to the outside may be connected onto the first substrate 11.

The first electrode tab 14 may be connected to the first electrode uncoated region LA2 by ultrasonic welding, laser welding, or resistance welding, and may protrude out of (e.g., may protrude from) the first electrode uncoated region LA2. The first electrode tab 14 may include aluminum like the first substrate 11.

The width of the first electrode tab 14 may be, for example, 3 mm to 15 mm, and the thickness may be 0.01 mm to 0.2 mm, but the first electrode tab 14 is not limited thereto and may be smaller or larger.

A protective tape 70 is attached to the first electrode tab 14 to protect the first electrode tab 14.

The first substrate 11 provides a passage for the movement of charges generated in the first active material layer 13 and supports the first active material layer 13.

The first electrode 121 may be a positive electrode, and the first substrate 11 may have a metal thin plate with excellent or suitable conductivity, for example, aluminum foil, or a mesh structure. The functional layer 12 may include a material containing a compound represented by the following Chemical Formula 1, a compound represented by the following Chemical Formula 2, or any suitable combination thereof:

$$\text{Chemical Formula 1} \qquad \text{Li}_{a1}\text{M}^1{}_{x1}\text{Fe}_{1-x1}\text{PO}_4$$

In Chemical Formula 1, $0.90 \leq a1 \leq 1.5$, $0 \leq x1 \leq 0.4$, $\text{M}^1$ is Mg, Co, Ni, and/or any suitable combination thereof,

$$\text{Chemical Formula 2} \qquad \text{Li}_{a2}\text{Mn}_{x2}\text{Fe}_{1-x2}\text{PO}_4$$

In Chemical Formula 2, $0.90 \leq a2 \leq 1.5$, and $0.1 \leq x2 \leq 1$.

The compound represented by Chemical Formula 1 may be a lithium iron phosphate compound. The mole fraction of lithium in Chemical Formula 1 may be appropriately adjusted between approximately 0.9 and 1.5, for example, $0.90 \leq a1 \leq 1.2$, or $0.95 \leq a1 \leq 1.1$. In Chemical Formula 1, Mn may exist in addition to Fe, and the mole fraction of Mn may be $0 \leq x1 \leq 0.7$, $0 \leq x1 \leq 0.5$, $0 \leq x1 \leq 0.3$, $0 \leq x1 \leq 0.1$ or $0 \leq x1 \leq 0.05$.

The compound represented by Chemical Formula 2 may be a lithium manganese iron phosphate compound (lithium manganese iron phosphate). In Chemical Formula 2, the mole fraction of lithium may be $0.90 \leq a2 \leq 1.2$ or $0.95 \leq a2 \leq 1.1$, similar to Chemical Formula 1. In Chemical Formula 2, the mole fraction of manganese may be $0.2 \leq x2 \leq 0.9$, $0.3 \leq x2 \leq 0.9$, or $0.4 \leq x2 \leq 0.8$. For example, if (e.g., when) $0.5 \leq x2 \leq 0.9$, the lithium ion conduction ability is relatively high.

For example, the functional layer 12 is a lithium transition metal phosphate and may include $\text{LiFePO}_4$, $\text{LiMn}_{0.5}\text{Fe}_{0.5}\text{PO}_4$, $\text{LiMnPO}_4$, and/or the like.

The functional layer 12 may include the above materials and may further include a binder and/or a conductive material. Here, the amount of the material may be 80 wt% to 97 wt% based on the total weight of the functional layer 12, the conductive material may be 0.5 wt% to 10 wt%, and the binder may be 1 wt% to 10 wt%.

The functional layer 12 may be formed to have a thickness of 0.3 micrometer ($\mu$m) to 30 $\mu$m.

The binder may easily adhere the material particles in the functional layer to each other and the material particles to the substrate. The binder may include a non-water-soluble binder, a water-soluble binder, and/or any suitable combination thereof.

The non-water-soluble binder may be (e.g., may be selected from among) polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamidoimide, polyimide, and/or any suitable combination thereof.

The water-soluble binder may be a rubber-based binder or polymer resin binder. The rubber-based binder may be (e.g., may be selected from among) styrene-butadiene rubber (SBR), acrylated styrene-butadiene rubber, acrylonitrile-butadiene rubber (ABR), acrylic rubber, butyl rubber, fluorine rubber, and/or any suitable combination thereof. The polymer resin binder may be (e.g., may be selected from among) polyethylene oxide, polyvinylpyrrolidone, polyepichlorohydrin, polyphosphazene, polyacrylonitrile, ethylene propylene diene copolymer, polyvinylpyridine, chlorosulfonated polyethylene, latex, polyester resin, acryl resin, phenol resin, epoxy resin, polyvinyl alcohol, and/or any suitable combination thereof.

When the water-soluble binder is utilized as a binder, a cellulose-based compound may be further utilized to provide viscosity. The cellulose-based compound includes one or more of carboxymethyl cellulose, hydroxypropyl methyl cellulose, methyl cellulose, and/or alkali metal salts thereof. The alkali metals may be Na, K, or Li.

A conductive material is utilized to provide conductivity (e.g., is a conductor) to an electrode, and the conductive material may include a carbon-based material, a metal-based material, a conductive polymer, and/or any suitable mixture thereof.

The conductive material included in the functional layer 12 may be any electron conductive material that does not cause chemical changes in a battery including it. For example, the conductive material may include a carbon-based material such as natural graphite, artificial graphite, carbon black, acetylene black, ketjen black, a carbon fiber, and/or the like; a metal-based material of a metal powder or a metal fiber including copper, nickel, aluminum, silver, and/or the like; a conductive polymer such as a polyphenylene derivative; or any suitable mixture thereof.

The functional layer 12 may have a larger resistance than the first active material layer described in more detail later, and if (*e.g.*, when) the total resistance of the first electrode 121 including the substrate 11, the functional layer 12, and the first active material layer 13 is 100, the resistance of the functional layer 12 may have a ratio of 30, the first active material layer may have a ratio of 69.9, and the substrate may have a ratio of 0.1 relative to the total resistance.

In one or more embodiments, the charge generated in the active material layer may be drawn to the outside through the functional layer, the substrate, and the first electrode tab, and current loss may occur when drawing out the current. Therefore, the first electrode tab and functional layer are formed to an optimal or suitable thickness to minimize or reduce current loss.

In one or more embodiments of the present disclosure, current loss due to increased resistance is minimized or reduced by obtaining the optimal or suitable functional layer thickness, and optimal or suitable width and thickness of the electrode tab, through Equation 1.

## Equation 1

$$15 \geq \frac{t}{L \times T}$$

In Equation 1, T: thickness of functional layer, L: width of electrode tab, and t: thickness of electrode tab.

Assuming that a resistance $R_E$ of the positive electrode plate is $A_E/t$ and a resistance $R_T$ of the electrode tab is $A_T/(L \times T)$, if the resistance $R_E$ of the electrode plate $\geq$ the resistance $R_T$ of the electrode, it indicates normal current flow and may be utilized as a battery.

At this time, $A_E$ is the product of the resistivity of the materials configuring the electrode plate and the electron movement path divided by the area of the functional layer, and $A_T$ refers to the product of the resistivity of the materials configuring the substrate and the tab and the electron movement path.

Therefore, the resistance of the electrode plate and the resistance of the electrode tab may be summarized as Equation 2 and Equation 3.

## Equation 2

$$\frac{A_E}{t} \geq \frac{A_T}{L \times T}$$

## Equation 3

$$\frac{A_E}{A_T} \geq \frac{t}{L \times T}$$

When manufacturing a positive electrode, the thickness (T) of the functional layer, the width (L) of the electrode tab, and the thickness (t) of the electrode tab may vary depending on the performance and size of the electrode assembly, so $A_E/A_T$ in Equation 3 is referred to as a constant (A), and optimal or suitable efficiency may be obtained if (*e.g.*, when) the constant (A) is less than or equal to 15 as shown in Equation 1.

This will be described with reference to tables and graphs. However, the following Examples are Comparative Examples are for the purposes of illustration and are not intended to limit the scope of the present disclosure.

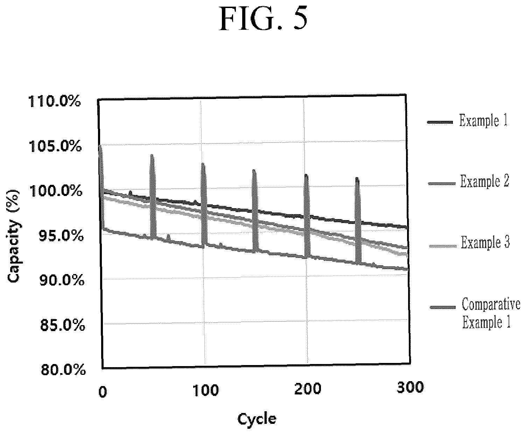

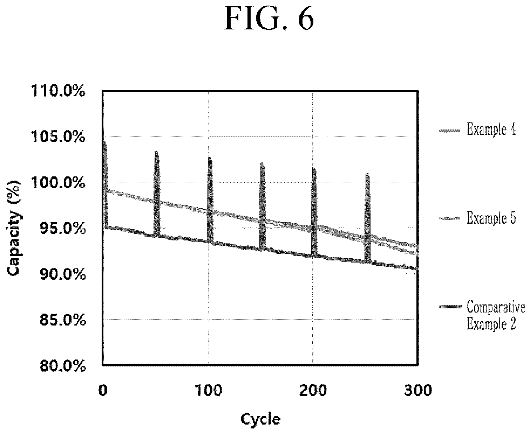

Tables 1 to 3 show specific values of Examples and Comparative Examples in which the thickness of the functional layer, the width of the electrode tab, the thickness of the electrode tab, and the constant value (A) are different, and the corresponding capacity was measured and shown in graphs in FIGs. 5 to 7, respectively.

Table 1

|  | Thickness of functional layer | Width of tab | Thickness of tab |  |
| --- | --- | --- | --- | --- |
|  | μm | mm | mm | A |
|  | T | L | t |  |
| Example 1 | 7 | 6 | 0.1 | 11.7 |

(continued)

|  | Thickness of functional layer | Width of tab | Thickness of tab | |
|---|---|---|---|---|
|  | μm | mm | mm | A |
|  | T | L | t | |
| Example 2 | 8 | 6 | 0.1 | 13.3 |
| Example 3 | 9 | 6 | 0.1 | 15.0 |
| Comparative Example 1 | 10 | 6 | 0.1 | 16.7 |

Table 2

|  | Thickness of functional layer | Width of tab | Thickness of tab | |
|---|---|---|---|---|
|  | μm | mm | mm | A |
|  | T | L | t | |
| Example 4 | 9 | 7 | 0.1 | 12.9 |
| Example 5 | 9 | 6 | 0.1 | 15.0 |
| Comparative Example 2 | 9 | 5 | 0.1 | 18.0 |

Table 3

|  | Thickness of functional layer | Width of tab | Thickness of tab | |
|---|---|---|---|---|
|  | μm | mm | mm | A |
|  | T | L | t | |
| Comparative Example 3 | 9 | 5 | 0.1 | 18.0 |
| Example 6 | 9 | 5 | 0.15 | 12.0 |
| Example 7 | 9 | 5 | 0.2 | 9 |

FIGs. 1 to 3 are graphs measuring capacity according to the number of cycles of Comparative Examples and Examples.

Comparative Examples 1 to 3 and Examples 1 to 7 are electrode assemblies with a charging capacity of 4,000 mAh, measured in one cycle with CC/CV 0.5C-4.4V, 0.2C cut-off, 10 minutes for capacity check charge and CC 0.5C-2.75V cut-off, 10 minutes for discharge.

Cycle life was measured by discharging under CC/CV 1.0C-4.4V, 0.2C cut-off, CC 1.0C-3.0V after 10 minutes of rest. Capacity check was measured every 50 cycles, including the first cycle, and cycle life was measured in the remaining sections.

Referring to Table 1, the width of the electrode tab and the thickness of the electrode tab are the same, and when the thickness of the functional layer is different, Examples 1 to 3 have a constant of 15 or less, satisfying Equation 1, and Comparative Example 1 did not satisfy Equation 1 as the constant was 16.7.

Referring to FIG. 5, it can be seen that the capacity of Examples 1 to 3 decreases depending on the number of cycles from 100%, while the capacity of Comparative Example 1 decreases from 95%, which is lower than that of the Examples.

Like this, if (e.g., when) the width of the electrode tab and the thickness of the electrode tab are constant, as in embodiments of the present disclosure, an optimal or suitable battery capacity may be designed by adjusting the thickness of the functional layer to satisfy the above Equation 1.

Referring to Table 2, the thickness of the functional layer and the thickness of the electrode tab are the same, and when the width of the functional layer is different, Examples 4 and 5 have a constant of 15 or less, satisfying Equation 1, and Comparative Example 2 did not satisfy Equation 1 as the constant was 18.

Referring to FIG. 2, it can be seen that the capacity of Examples 1 to 3 decreases depending on the number of cycles from 100%, while the capacity of Comparative Example 1 decreases from 95%, which is lower than that of the Examples.

Like this, if (e.g., when) the thickness of the functional layer and the thickness of the electrode tab are constant, as in embodiments of the present disclosure, an optimal or suitable battery capacity may be designed by adjusting the width of the electrode tab to satisfy the above Equation 1.

Referring to Table 3, the thickness of the functional layer and the width of the electrode tab are the same, and when the thickness of the electrode tab is different, Examples 6 and 7 have a constant of 15 or less, satisfying Equation 1, and Comparative Example 3 did not satisfy Equation 1 as the constant was 18.

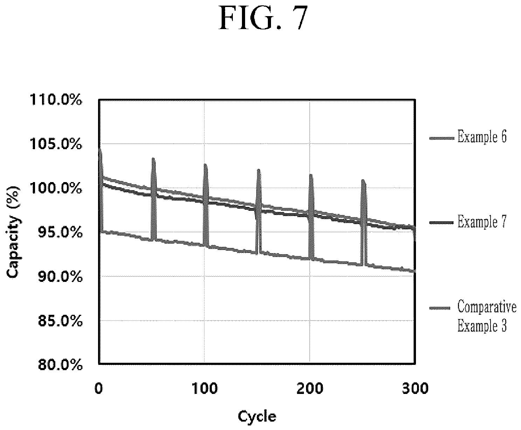

Referring to FIG. 7, it can be seen that the capacity of Examples 6 and 7 decreases depending on the number of cycles from 100%, while the capacity of Comparative Example 3 decreases from 95%, which is lower than that of the Examples.

Like this, if (*e.g.*, when) the thickness of the functional layer and the width of the electrode tab are constant, as in embodiments of the present disclosure, an optimal or suitable battery capacity may be designed by adjusting the thickness of the electrode tab to satisfy the above Equation 1.

Thus, in embodiments of the present disclosure, in order to minimize or reduce the current loss due to the increase in resistance as the functional layer is formed, the thickness of the functional layer is obtained according to the width and thickness of the electrode tab and is formed with the optimal or suitable thickness, thereby minimizing or reducing the current loss.

Additionally, it is possible to change the width and thickness of the electrode tab depending on the thickness of the functional layer to form (or provide) an electrode tab with optimal or suitable capacity.

The first active material layer 13, as shown, *e.g.*, in FIG. 4, may be formed by dispersing an electrode mixture containing a positive active material, binder, conductive material, and/or the like in a solvent to form (or to provide) a slurry, which is then applied to at least one surface of the first substrate 11, followed by drying and compression.

The first active material layer 13 includes a positive active material, and a compound capable of reversible intercalation and deintercalation of lithium (lithiated intercalation compound) may be utilized as the positive active material.

Examples of positive active materials include compounds represented by any one or more of the following Chemical Formulas: $Li_aA_{1-b}X_bD_2$ ($0.90 \leq a \leq 1.8$, $0 \leq b \leq 0.5$); $Li_aA_{1-b}X_bO_{2-c}D_c$ ($0.90 \leq a \leq 1.8$, $0 \leq b \leq 0.5$, $0 \leq c \leq 0.05$); $Li_aE_{1-b}X_bO_{2-c}D_c$ ($0.90 \leq a \leq 1.8$, $0 \leq b \leq 0.5$, $0 \leq c \leq 0.05$); $Li_aE_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cD_\alpha$ ($0.90 \leq a \leq 1.8$, $0 \leq b \leq 0.5$, $0 \leq c \leq 0.5$, $0 < \alpha \leq 2$); $Li_aNi_{1-b-c}Co_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.05$, $0 < \alpha < 2$); $Li_aNi_{1-b-c}Mn_bX_cD_\alpha$ ($0.90 \leq a \leq 1.8$, $0 \leq b \leq 0.5$, $0 \leq c \leq 0.05$, $0 < \alpha \leq 2$); $Li_aNi_{1-b-c}Mn_bX_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.05$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2PO_{43}$ ($0 \leq f \leq 2$); $Li_{(3-f)}Fe_2PO_{43}$ ($0 \leq f \leq 2$); and/or $Li_aFePO_4$ ($0.90 \leq a \leq 1.8$).

In the above Chemical Formulas, A is (*e.g.*, is selected from among) a group including (*e.g.*, consisting of) Ni, Co, Mn, and/or any suitable combination thereof; X is (*e.g.*, is selected from among) a group including (*e.g.*, consisting of) Al, Ni, Co, Mn, Cr, Fe, Mg, Sr, V, a rare earth element, and/or any suitable combination thereof; D is (*e.g.*, is selected from among) a group including (*e.g.*, consisting of) O, F, S, P, and/or any suitable combination thereof; E is (*e.g.*, is selected from among) a group including (*e.g.*, consisting of) Co, Mn, and/or any suitable combination thereof; T is (*e.g.*, is selected from among) a group including (*e.g.*, consisting of) F, S, P, and/or any suitable combination thereof; G is (*e.g.*, is selected from among) a group including (*e.g.*, consisting of) Al, Cr, Mn, Fe, Mg, La, Ce, Sr, V, and/or any suitable combination thereof; Q is (*e.g.*, is selected from among) a group including (*e.g.*, consisting of) Ti, Mo, Mn, and/or any suitable combination thereof; Z is (*e.g.*, is selected from among) a group including (*e.g.*, consisting of) Cr, V, Fe, Sc, Y, and/or any suitable combination thereof; and J is (*e.g.*, is selected from among) the group including (*e.g.*, consisting of) V, Cr, Mn, Co, Ni, Cu, and/or any suitable combination thereof.

The compounds may have a coating layer on the surface or may be mixed with another compound having a coating layer.

The coating layer may include at least one coating element compound of (*e.g.*, selected from among) a group including (*e.g.*, consisting of) an oxide of a coating element, a hydroxide of a coating element, an oxyhydroxide of a coating element, an oxycarbonate of a coating element, and/or a hydroxycarbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, and/or any suitable combination thereof. The coating layer forming process may utilize a method having no adverse influence on properties of the active material. For example, the method may include spray coating, dipping, and/or the like.

An example of the positive active material may include a positive active material represented by the following Chemical Formula A1:

Chemical Formula A1    $Li_{a11}Ni_{x11}M^{11}_{y11}M^{12}_{1-x11-y12}O_2$

In Chemical Formula A1, $0.9 \leq a11 \leq 1.8$, $0.3 \leq x11 \leq 1$, $0 \leq y11 \leq 0.7$, $M^{11}$ and $M^{12}$ may each independently be (*e.g.*,

may be selected from among) Al, B, Ce, Co, Cr, F, Mg, Mn, Mo, Nb, P, S, Si, Sr, Ti, V, W, Zr, and/or any suitable combination thereof.

In Chemical Formula A1, one or more embodiments may include $0.4 \leq x11 \leq 1$ and $0 \leq y11 \leq 0.6$, $0.5 \leq x11 \leq 1$ and $0 \leq y11 \leq 0.5$, $0.6 \leq x11 \leq 1$ and $0 \leq y11 \leq 0.4$, $0.7 \leq x11 \leq 1$ and $0 \leq y11 \leq 0.3$, $0.8 \leq x11 \leq 1$ and $0 \leq y11 \leq 0.2$, or $0.9 \leq x11 \leq 1$ and $0 \leq y11 \leq 0.1$.

For example, the positive active material may include lithium nickel cobalt complex oxide represented by the following Chemical Formula A2.

$$\text{Chemical Formula A2} \qquad \text{Li}_{a12}\text{Ni}_{x12}\text{Co}_{y12}\text{M}^{13}{}_{1-x12-y12}\text{O}_2$$

In Chemical Formula A2, $0.9 \leq a12 \leq 1.8$, $0.3 \leq x12 < 1$, $0 < y12 \leq 0.7$, and $\text{M}^{13}$ may be (e.g., may be selected from among) Al, B, Ce, Cr, F, Mg, Mn, Mo, Nb, P, S, Si, Sr, Ti, V, W, Zr, and/or any suitable combination thereof.

In Chemical Formula A2, one or more embodiments may include $0.3 \leq x12 \leq 0.99$ and $0.01 \leq y12 \leq 0.7$, $0.4 \leq x12 \leq 0.99$ and $0.01 \leq y12 \leq 0.6$, $0.5 \leq x12 \leq 0.99$ and $0.01 \leq 12 \leq 0.5$, $0.6 \leq x12 \leq 0.99$ and $0.01 \leq y12 \leq 0.4$, $0.7 \leq x12 \leq 0.99$ and $0.01 \leq y12 \leq 0.3$, $0.8 \leq x12 \leq 0.99$ and $0.01 \leq y12 \leq 0.2$, or $0.9 \leq x12 \leq 0.99$ and $0.01 \leq y12 \leq 0.1$.

For example, the positive active material may include lithium nickel cobalt complex oxide represented by the following Chemical Formula A3.

$$\text{Chemical Formula A3} \qquad \text{Li}_{a13}\text{Ni}_{x13}\text{Co}_{y13}\text{M}^{14}{}_{z13}\text{M}^{15}{}_{1-x13-y13-z13}\text{O}_2$$

In Chemical Formula A3, $0.9 \leq a13 \leq 1.8$, $0.3 \leq x13 \leq 0.98$, $0.01 \leq y13 \leq 0.69$, $0.01 \leq z13 \leq 0.69$, $\text{M}^{14}$ may be (e.g., may be selected from among) Al, Mn, and/or any suitable combination thereof, and $\text{M}^{15}$ may be (e.g., may be selected from among) B, Ce, Cr, F, Mg, Mo, Nb, P, S, Si, Sr, Ti, V, W, Zr, and/or any suitable combination thereof.

In Chemical Formula A3, one or more embodiments may include $0.4 \leq x13 \leq 0.98$, $0.01 \leq y13 \leq 0.59$, and $0.01 \leq z13 \leq 0.59$, $0.5 \leq x13 \leq 0.98$, $0.01 \leq y13 \leq 0.49$, and $0.01 \leq z13 \leq 0.49$, or $0.6 \leq x13 \leq 0.98$, $0.01 \leq y13 \leq 0.39$, and $0.01 \leq z13 \leq 0.39$, or $0.7 \leq x13 \leq 0.98$, $0.01 \leq y13 \leq 0.29$, and $0.01 \leq z13 \leq 0.29$, or $0.8 \leq x13 \leq 0.98$, $0.01 \leq y13 \leq 0.19$, and $0.01 \leq z13 \leq 0.19$, or $0.9 \leq x13 \leq 0.98$, $0.01 \leq y13 \leq 0.09$, and $0.01 \leq z13 \leq 0.09$.

The first active material layer 13 includes the positive active material and may further include a binder and/or a conductive material. Here, the amount of the positive active material may be 90 wt% to 98 wt%, for example, 90 wt% to 95 wt%, based on the total weight of the first active material layer. The amount of each of the binder and the conductive material may be 1 wt% to 5 wt% based on the total weight of the first active material layer.

The binder may serve to adhere the positive active material particles with one another and to adhere the positive active material to the functional layer or substrate, and may be the same as the binder utilized in (e.g., configuring) the functional layer 12.

The conductive material may be included to provide conductivity to the electrode and may be the same as the conductive material utilized in (e.g., configuring) the functional layer 12.

Referring again to FIGs. 1 and 2, the second electrode 122 includes a second electrode active portion and a second electrode uncoated portion.

The second electrode active portion includes a second substrate and a second active material layer formed on at least one surface of the second substrate. The second electrode uncoated region is positioned at each of the front end and the rear end of the second electrode. A separate material layer is not formed on the second substrate, so the surface of the second substrate may be exposed, and a second electrode tab 23 for drawing current to the outside may be connected to the second substrate. The second electrode active portion, second electrode uncoated portion, second substrate, second active material layer, and second electrode tab 23 of the second electrode 122 are similar to the first electrode active portion LA1, first electrode uncoated regions LA2, first substrate 11, first active material layer 13, and first electrode tab 14 of the first electrode 121, respectively, described with reference to FIGS. 3 and 4.

The second electrode tab may be connected to the second electrode uncoated region by ultrasonic welding, laser welding, or resistance welding, and may protrude from (e.g., out of) the second electrode uncoated region. The second electrode tab may include nickel.

The second substrate provides a passage for the movement of charges generated in the second active material layer and supports the second active material layer.

The second electrode may be a negative electrode, and the second substrate may have a structure of a thin metal plate with excellent or suitable conductivity, for example, copper foil, nickel foil, or mesh. The second active material layer may be formed by dispersing an electrode mixture containing a negative active material, binder, conductive material, and/or the like in a solvent to form (or provide) a slurry, which is then applied to at least one surface of the second substrate, followed by drying and compression.

The negative active material of the second active material layer may be a material capable of reversible intercalation/deintercalation of lithium ion, lithium metal, an alloy of lithium metal, a material capable of doping and dedoping lithium, and/or a transition metal oxide.

Materials that may reversibly intercalate/deintercalate the lithium ion may be, for example, a carbon material, that is, a carbon-based negative active material generally utilized in lithium rechargeable batteries. Representative examples of carbon-based negative active materials include crystalline carbon, amorphous carbon, and/or any suitable combination thereof. Examples of the crystalline carbon may be amorphous, sheet, flake, spherical or fiber shaped (*e.g.*, in a form of fibers) natural graphite or artificial graphite. Examples of the amorphous carbon may be a soft carbon or hard carbon, mesophase pitch carbide, fired coke, and/or the like.

The lithium metal alloy may be lithium and an alloy of metals of (*e.g.*, selected from among) the group including (*e.g.*, consisting of) Na, K, Rb, Cs, Fr, Be, Mg, Ca, Sr, Si, Sb, Pb, In, Zn, Ba, Ra, Ge, Al and/or Sn.

The material capable of doping and dedoping lithium may be Si, Si, $SiO_x$ ($0 < x < 2$), Si-Q alloy (wherein Q is an element of (*e.g.*, selected from among) an alkali metal, an alkaline-earth metal, a Group 13 element, a Group 14 element, a Group 15 element, a Group 16 element, a transition metal, a rare earth element, and/or any suitable combination thereof, but not Si), a Si-carbon composite, Sn, $SnO_2$, a Sn-R (wherein R is an element of (*e.g.*, selected from among) an alkali metal, an alkaline-earth metal, a Group 13 element, a Group 14 element, a Group 15 element, a Group 16 element, a transition metal, a rare earth element, and/or any suitable combination thereof, but not Sn), a Sn-carbon composite, and/or the like, and at least one of these materials may be mixed with $SiO_2$. The elements Q and R may be (*e.g.*, may be selected from among) the group including (*e.g.*, consisting of) Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and/or any suitable combination thereof.

Lithium titanium oxide may be utilized as the transition metal oxide.

The separator 123 is positioned between the first electrode 121 and the second electrode 122 and prevents or reduces the likelihood of short circuits between them.

The separator 123 may be formed of a porous film with relatively high ion permeability and mechanical strength. For example, it may be formed of an olefin-based polymer such as polyethylene or polypropylene. The separator may extend in the length direction or width direction, longer than the first electrode active portion LA1 or the second electrode active portion, which may prevent or reduce the likelihood of a short circuit from occurring between the first electrode active portion LA1 and the second electrode active portion due to thermal contraction.

The electrode assembly 100 may be contained in the pouch-type or kind case 200 together with the electrolyte. The pouch-type or kind case may be formed of a laminated exterior material 201 and 202 (*see*, *e.g.*, FIG. 1), and the laminated exterior material may be formed of a multi-layer structure having, for example, a first insulating layer 2, a metal layer 3, and a second insulating layer 4. Various other adhesive layers or functional layers may be added.

The first insulating layer 2 may be formed of a material having insulating and thermal adhesive properties on the inner surface of the laminated exterior material, and may be sealed by thermo-bonding the edges while the electrode assembly 100 is accommodated in the case 200. Additionally, the first insulating layer 2 is formed on one surface of the metal layer 3, and forms the inner side of the laminated exterior material facing the electrode assembly 100. The first insulating layer 2 may be formed of casted polypropylene (CPP) or equivalents thereof, which do not react with the electrolyte solution.

In the above description, a pouch-type or kind rechargeable battery has been described, but the present disclosure is not limited thereto, and the positive electrode of the present disclosure may be utilized in prismatic and cylindrical shapes as well.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, *e.g.*, a battery controller, and/or any other relevant devices or components according to embodiments of the present disclosure described herein may be implemented utilizing any suitable hardware, firmware (*e.g.*, an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. An electrode comprising:

   a substrate having an electrode uncoated portion and an electrode active portion;
   a functional layer on the substrate at the electrode active portion;
   an active material layer on the functional layer; and
   an electrode tab electrically connected to the substrate at the electrode uncoated portion,
   wherein the thickness (T) of the functional layer, a width (L) of the electrode tab, and the thickness (t) of the electrode tab satisfy Equation 1:

   Equation 1

$$15 \geq \frac{t}{L \times T},$$

   and
   wherein the electrode is for a rechargeable battery.

2. The electrode as claimed in claim 1, wherein the width (L) of the electrode tab is 3 mm to 15 mm, and the thickness (t) of the electrode tab is 0.01 millimeter (mm) to 0.2 mm.

3. The electrode as claimed in claim 1 or 2, wherein the thickness (T) of the functional layer is 0.3 micrometer ($\mu$m) to 30 $\mu$m.

4. The electrode as claimed in any of the claims 1 to 3, wherein the resistance of the functional layer is greater than the resistance of the active material layer.

5. The electrode as claimed in any of the claims 1 to 4, wherein the resistance of the functional layer is greater than the resistance of the electrode tab.

6. The electrode as claimed in any of the claims 1 to 5, wherein the functional layer comprises a material comprising a compound represented by Chemical Formula 1, a compound represented by Chemical Formula 2, or a combination thereof:

   Chemical Formula 1          $Li_{a1}M^1_{x1}Fe_{1-x1}PO_4$

   wherein, in Chemical Formula 1, $0.90 \leq a1 \leq 1.5$, $0 \leq x1 \leq 0.4$, and $M^1$ is Mg, Co, Ni, or a combination thereof,

Chemical Formula 2 $Li_{a2}Mn_{x2}Fe_{1-x2}PO_4$

wherein, in Chemical Formula 2, $0.90 \leq a2 \leq 1.5$, and $0.1 \leq x2 \leq 1$.

7. The electrode as claimed in any of the claims 1 to 6, wherein the substrate comprises aluminum, and the active material layer comprises a positive active material.

8. The electrode as claimed in any of the claims 1 to 7, wherein the electrode tab comprises aluminum.

9. An electrode assembly (100), comprising:

   a positive electrode comprising the electrode as claimed in any of the claims 1 to 8;
   a separator overlapping the positive electrode; and
   a negative electrode overlapping the separator.

10. A rechargeable battery (1000) comprising:

   an electrode assembly (100) comprising a positive electrode comprising the electrode as claimed in any of the claims 1 to 8, a separator overlapping the positive electrode, and a negative electrode overlapping the separator;
   a case (200) comprising therein an electrolyte together with the electrode assembly (100); and
   a cap assembly sealing the case (200).

11. The rechargeable battery (1000) as claimed in claim 10, wherein the electrode assembly (100) is a jelly-roll type electrode assembly.

12. The rechargeable battery as claimed in claim 10 or 11, wherein the case (200) is a pouch-type case.

# FIG. 1

FIG. 2

EP 4 550 516 A2

# FIG. 3

FIG. 4

# FIG. 5

# FIG. 6

# FIG. 7